# EUROPÄISCHE PATENTSCHRIFT

(11) **EP 3 798 600 B1**
(45) Veröffentlichungstag und Bekanntmachung des Hinweises auf die Patenterteilung: **18.01.2023**
(21) Anmeldenummer: 20194179.6
(22) Anmeldetag: 02.09.2020
(51) Int. Cl.: G01L 11/04, G01F 1/66

(54) **MESSEINRICHTUNG UND VERFAHREN ZUR ERMITTLUNG EINES DRUCKS**
MEASURING DEVICE AND METHOD FOR MEASURING PRESSURE
DISPOSITIF DE MESURE ET PROCÉDÉ DE DÉTERMINATION D'UNE PRESSION

(30) Priorität: 30.09.2019 DE 102019006807
(43) Veröffentlichungstag der Anmeldung: 31.03.2021
(73) Patentinhaber: Diehl Metering GmbH, 91522 Ansbach (DE)
(72) Erfinder: Wetzel, Marcus, 91560 Heilsbronn (DE); Neder, Frederik, 91452 Wilhermsdorf (DE); Hofmann, Alexander, 91623 Sachsen (DE); Herrmann, Florian, 91550 Dinkelsbühl (DE)
(74) Vertreter: Diehl Patentabteilung

(56) Entgegenhaltungen:
- EP-A1- 3 492 878
- WO-A1-2018/219492

## Beschreibung

Die Erfindung betrifft eine Messeinrichtung zur Ermittlung eines Drucks in einem ein Fluid aufnehmenden oder von dem Fluid durchströmten Messvolumen nach der Präambel des Anspruchs 1.

In vielen Anwendungsfällen kann es gewünscht sein, einen Druck eines Fluids zu erfassen. Daher ist es prinzipiell bekannt, Durchflusszähler durch eine zusätzliche Sensorik zur Druckmessung zu erweitern. Eine Verwendung separater Sensoren zur Druckmessung erhöht jedoch die Komplexität des Durchflusszählers und somit auch die Kosten und unter Umständen den Bauraumverbrauch.

Ein Verfahren zur Bestimmung des Drucks eines Fluids, das bei einer Nutzung in einem Ultraschalldurchflusszähler keine zusätzlichen Sensoren benötigt, ist aus der Druckschrift DE 10 2017 005 207 A1 bekannt. Hierbei wird eine Laufzeit einer Ultraschallwelle von einem sendenden zu einem empfangenden Ultraschallwandler für zwei unterschiedliche Anregungsfrequenzen erfasst. In Abhängigkeit der Differenz dieser Laufzeiten kann der Druck im Fluid ermittelt werden. Vorzugsweise wird der Laufzeitunterschied für Wellen mit unterschiedlicher Anregungsfrequenz für beide Ausbreitungsrichtungen ermittelt und berücksichtigt. Da in dem erläuterten Verfahren zumindest zwei sequentielle Messungen für unterschiedliche Anregungsfrequenzen, typischerweise sogar vier sequentielle Messungen für die beiden Anregungsfrequenzen und Ausbreitungsrichtungen, erforderlich sind, können bereits relativ geringfügige Druck- bzw. Durchflussmengenänderungen zwischen den genutzten Messintervallen zu einer relativ starken Störung der Messung führen, womit zumindest in einigen Anwendungsfällen der ermittelte Druck stark rauschbehaftet ist.

Weiterer Stand der Technik ist aus WO 2018/219492 A1 und EP 3 492 878 A1 bekannt. Der Erfindung liegt somit die Aufgabe zugrunde, einen demgegenüber verbesserten Ansatz zur Ermittlung eines Drucks anzugeben, der insbesondere weniger störanfällig ist und dennoch mit geringem technischen Aufwand implementiert werden kann.

Die Aufgabe wird erfindungsgemäß durch eine Messeinrichtung nach Anspruch 1 gelöst.

Im Rahmen der Erfindung wurde erkannt, dass insbesondere dann, wenn durch den jeweiligen Schwingungswandler die Welle unmittelbar in das Fluid eingekoppelt bzw. aus diesem ausgekoppelt wird, jedoch auch bei einer indirekten Anregung der Welle über eine Anregung der Seitenwand des Messvolumens, ein Druck in dem Fluid den jeweiligen Schwingungswandler verformt bzw. vorspannt. Dies führt dazu, dass bestimmte Teilmuster des durch die Welle verursachten Schwingungsmusters des bzw. des weiteren Schwingungswandlers bzw. die hieraus resultierenden Ausgangssignale des Schwingungswandlers von der entsprechenden Verformung bzw. Verspannung und somit von dem Druck abhängen. Beispielsweise kann das Schwingungsmuster eine zumindest quasi-periodische Schwingung sein, wobei in Abhängigkeit des auftretenden Drucks beispielsweise die Länge der ermittelten Schwingungsperiode bzw. einer bestimmten Teilperiode, erfindungsgemäß die Zeit zwischen zwei aufeinanderfolgenden Nulldurchgängen der Schwingung, variiert. Da beispielsweise in Durchflusszählern häufig ohnehin Zeitpunkte von Nulldurchgängen einer Schwingung oder Ähnliches erfasst werden sollen, um eine Laufzeit einer Welle zwischen zwei Schwingungswandlern zu ermitteln, kann die erfindungsgemäße Messeinrichtung unter Umständen ohne eine Änderung einer Sensorik eines bekannten Durchflusszählers durch eine relativ einfache Anpassung der Messelektronik bzw. Software implementiert werden.

Das Messvolumen kann durch wenigstens eine Seitenwand begrenzt sein, wobei der Schwingungswandler und der weitere Schwingungswandler an der gleichen Seitenwand oder an unterschiedlichen Seitenwänden des Messvolumens angeordnet sind. Die Seitenwand bzw. Seitenwände können insbesondere durch ein Messrohr gebildet werden. Dieses kann beispielsweise das Messrohr eines Durchflusszählers sein, wobei der Durchflusszähler beispielsweise den Durchfluss in Abhängigkeit einer Laufzeit der Welle zwischen dem Schwingungswandler und dem weiteren Schwingungswandler ermitteln kann. In diesem Fall ist keine weitere Sensorik erforderlich, um zusätzlich den Druck zu ermitteln.

Der Schwingungswandler kann die Welle unmittelbar in das Fluid einkoppeln bzw. das Schwingungsmuster kann unmittelbar durch das Fluid auf den Schwingungswandler bzw. den weiteren Schwingungswandler übertragen werden. Alternativ ist es auch möglich, dass der Schwingungswandler zunächst eine Schwingung der Seitenwand des Messvolumens, insbesondere eine geführte Welle, z.B. eine Lamb-Welle, in der Seitenwand anregt, wodurch wiederum die Welle im Fluid angeregt wird. Entsprechend ist es auch möglich, dass die Welle zunächst bei einem Auftreffen auf die Seitenwand eine Schwingung der Seitenwand, insbesondere eine geführte Welle in der Seitenwand, anregt, die dann auf den Schwingungswandler bzw. den weiteren Schwingungswandler übertragen wird, um diesen zu Schwingungen anzuregen.

Das Schwingungsmuster betreffende Ausgangssignale des oder des weiteren Schwingungswandlers oszillieren um einen Referenzwert, wobei die Zeitdauer als Zeitabstand zwischen zwei Vorzeichenwechseln der Differenz aus Ausgangssignal und Referenzwert ermittelt wird. Das Ausgangssignal kann insbesondere ein Spannungssignal oder Stromsignal sein. Der Referenzwert kann insbesondere Null sein, womit die Zeitdauer als Zeitabstand zwischen zwei Vorzeichenwechseln des Ausgangssignals, also zwischen zwei Nulldurchgängen des Ausgangssignals, ermittelt wird. Erfindungsgemäß wird die Zeitdauer derart ermittelt, dass die Zeitdauer als Zeitabstand zwischen zwei zeitlich aufeinanderfolgenden Vorzeichenwechseln bzw. Nulldurchgängen ermittelt wird.

Wird das beschriebene Vorgehen beispielsweise auf eine Sinusschwingung oder eine ähnliche Schwingung angewandt, kann hierdurch die Zeitdauer der positiven bzw. negativen Teilperiode zur Ermittlung des Drucks herangezogen werden.

Zur Erkennung von Vorzeichenwechseln bzw. Nulldurchgängen von Ausgangssignalen von Schwingungswandlern bzw. Differenzen zwischen diesen Ausgangssignalen und Referenzwerten sind eine Vielzahl von Ansätzen bekannt. Beispielsweise können entsprechende Nulldurchgänge bzw. Vorzeichenwechsel mithilfe von Komparatoren erkannt werden, die Triggersignale zum Auslesen bzw. zurücksetzen eines Zählers für den Zeitabstand bereitstellen. Entsprechende Komparatoren und/oder Zähler können als separate Bauteile implementiert sein, jedoch auch beispielsweise in einen Mikrocontroller oder Ähnliches integriert sein. Alternativ wäre es beispielsweise auch möglich, das Ausgangssignal durch Analog-Digital-Wandlung abzutasten und die Nulldurchgänge bzw. Vorzeichenwechsel in den resultierenden Digitaldaten aufzufinden.

Der Druck im Messvolumen und eine hieraus resultierende Verspannung bzw. Verformung eines Schwingungswandlers kann je nach konkreter Ausgestaltung des Schwingungswandlers und der Anordnung am Messvolumen sowie in Abhängigkeit des genutzten Anregungsmusters für den Schwingungswandler die Zeitdauer auf vielfältige Weise beeinflussen. Beispielsweise kann eine Verformung oder Verspannung zu einer Nichtlinearität des Schwingungsmusters bzw. des Ausgangssignals bezüglich der durch die Welle im Fluid verursachten Druckschwankungen führen. Insbesondere wenn ein Anregungsmuster mit scharfen Sprüngen, beispielsweise mit einem Phasen- oder Amplitudensprung zur Markierung einer bestimmten Schwingungsperiode, genutzt wird, kann die Übertragung entsprechender Drucktransienten auf den Schwingungswandler bzw. den weiteren Schwingungswandler je nach Verformung bzw. Verspannung des Schwingungswandlers zu etwas unterschiedlichen Schwingungsmustern und somit unterschiedlichen Zeitdauern führen.

Zu einem besonders deutlichen und über einen gewissen Druckbereich typischerweise sogar näherungsweise linearen Zusammenhang zwischen Druck und Zeitdauer kann es jedoch führen, dass eine Verformung eines Schwingungswandlers aufgrund eines Drucks, beispielsweise eine Verformung eines piezoelektrischen Schwingungswandlers, zu einem konstanten Offset des Ausgangssignals führen kann. Ein solcher Offset führt jedoch beispielsweise bei einer Sinusschwingung oder auch bei einer Vielzahl anderer Schwingungen dazu, dass die Zeitdauer, für die das Ausgangssignal positiv ist bzw. über einem Referenzwert liegt, verlängert wird, während die Zeitdauer, für die das Ausgangssignal negativ ist bzw. unterhalb eines Referenzwertes liegt, verkürzt wird oder umgekehrt. Da beispielsweise eine Sinuswelle im Bereich des Nulldurchgangs sich näherungsweise linear mit der Zeit ändert, resultiert somit für nicht allzu große Offsets näherungsweise ein linearer Zusammenhang zwischen der Änderung der Zeitdauer der entsprechenden Teilperiode, also des Teilmusters, und dem Offset. Bei entsprechendem Aufbau des Schwingungswandlers kann somit auch ein näherungsweise linearer Zusammenhang zwischen der Änderung der Zeitdauer und dem Druck resultieren.

Es wäre zwar prinzipiell auch möglich, einen entsprechenden Offset unmittelbar, beispielsweise durch Analog-Digital-Wandlung des Ausgangssignals, zu messen, dies würde jedoch eine Erfassung des Ausgangssignals mit hoher Auflösung erfordern, was den Aufwand zur Implementierung der Messeinrichtung erhöhen kann. In vielen Anwendungsfällen, beispielsweise wenn die Messeinrichtung gleichzeitig zur Bestimmung einer Durchflussmenge dienen soll, kann jedoch eine Erfassung von Vorzeichenwechseln bzw. Nulldurchgängen bereits ohnehin mit hoher Zeitauflösung möglich sein, so dass auch bezüglich des Drucks eine gute Erfassungsgenauigkeit ohne zusätzlichen Messaufwand erreicht werden kann.

Die Steuereinrichtung kann dazu eingerichtet sein, den Schwingungswandler mit einem vorgegebenen Anregungsmuster anzusteuern, dass mehrere Schwingungszyklen einer Schwingung, insbesondere einer Sinusschwingung, umfasst, wobei ein ausgewählter der Schwingungszyklen durch eine Phasenänderung, insbesondere einen Phasensprung, markiert ist. Hierbei kann das Anregungsmuster insbesondere abgesehen von der Phasenänderung und/oder einer einhüllenden bzw. Fensterfunktion zur Begrenzung der Länge des Anregungsmusters eine periodische Schwingung mit insbesondere fester Frequenz sein. Das Schwingungsmuster des bzw. des weiteren Schwingungswandlers kann mit einer gewissen Zeitverzögerung, die insbesondere aus der Laufzeit der Welle in dem Fluid resultieren kann, im Wesentlichen dem Anregungsmuster entsprechen. Abweichungen können insbesondere im Bereich der Phasenänderung aufgrund der Dispersionsrelation des Fluids bzw. aufgrund des Transientenverhaltens des Schwingungswandlers bzw. des weiteren Schwingungswandlers auftreten.

Die Markierung des ausgewählten Schwingungszyklus durch eine Phasenänderung kann insbesondere dazu dienen, eine Laufzeit der Welle von dem Schwingungswandler entlang des Ausbreitungspfades zurück zu dem Schwingungswandler bzw. zu dem weiteren Schwingungswandler zu ermitteln, was beispielsweise dazu dienen kann, einen Durchfluss durch das Messvolumen oder eine Fluideigenschaft, beispielsweise eine Temperatur des Fluids, zu erfassen. Der ausgewählte Schwingungszyklus kann beispielsweise dadurch erkannt werden, dass der Phasensprung bzw. die Phasenänderung dazu führt, dass der ausgewählte Schwingungszyklus länger oder kürzer als die weiteren Schwingungszyklen ist, was beispielsweise wie obig erläutert durch die Ermittlung von Zeitabständen zwischen Nulldurchgängen bzw. Vorzeichenwechseln des Ausgangssignals bzw. der Differenz des Ausgangssignals und eines Referenzwertes erkannt werden kann.

Das vorgegebene Teilmuster des Schwingungsmusters kann von dem Anregungsmuster in dem ausgewählten Schwingungszyklus abhängen. Anders ausgedrückt kann das Anregungsmuster in dem ausgewählten Schwingungszyklus über Druckschwankungen als Welle über den Ausbreitungspfad zurück zu dem Schwingungswandler oder zu dem weiteren Schwingungswandler übertragen werden, wobei zumindest ein Teil dieser Druckschwankungen zu dem Teilmuster des Schwingungsmusters führt. Insbesondere kann ein Fenster für die Messdatenerfassung so gewählt werden, dass der Zeitpunkt des Empfangs des Ausgewählten der Schwingungszyklen innerhalb dieses Zeitfensters liegt, so dass die Messdaten diesen ausgewählten Schwingungszyklus bzw. zumindest einen Teil dieses ausgewählten Schwingungszyklus betreffen, wobei insbesondere der Phasensprung bzw. die Phasenänderung innerhalb dieses Messfensters liegt bzw. dieses begrenzt. Beispielsweise kann einer der Vorzeichenwechsel, deren Zeitabstand wie obig erläutert die Zeitdauer, aus der der Druck ermittelt wird, vorgeben kann, durch den Phasensprung bzw. die Phasenänderung verursacht sein.

Die Steuereinrichtung kann dazu eingerichtet sein, einen Erfassungszeitpunkt, zu dem das Teilmuster erfasst wird, zu ermitteln und in Abhängigkeit des Erfassungszeitpunkts eine Durchflussgeschwindigkeit oder ein Durchflussvolumen des Fluids durch das Messvolumen zu ermitteln. Insbesondere kann, wie obig erläutert, das Teilmuster dem ausgewählten Schwingungszyklus oder einem Teilzyklus des ausgewählten Schwingungszyklus entsprechen bzw. insbesondere mit der Phasenänderung bzw. dem Phasensprung beginnen oder enden. Somit kann beispielsweise ein Vorzeichenwechsel bzw. Nulldurchgang des Ausgangssignals bzw. der Differenz zwischen Ausgangssignal und Referenzwert zu Beginn oder Ende des ausgewählten Schwingungszyklus bzw. zum Zeitpunkt der Phasenänderung bzw. des Phasensprungs genutzt werden, um eine Laufzeit der Welle von dem Schwingungswandler zu dem weiteren Schwingungswandler zu ermitteln. Wird dies für beide Ausbreitungsrichtungen durchgeführt, kann aus der Laufzeitdifferenz wie üblich eine Durchflussgeschwindigkeit bzw. anhand der bekannten Messgeometrie des Messvolumens ein Durchflussvolumen ermittelt werden.

Eine beispielhafte Implementierung hierfür soll im Folgenden erläutert werden. Hierbei wird zur Vermeidung von unnötigen Wiederholungen ein Nulldurchgang bzw. Vorzeichenwechsel des Ausgangssignals bzw. der Differenz aus Ausgangssignal und Referenzwert verkürzend als Nulldurchgang bezeichnet. Zu dem Zeitpunkt, zudem die Phasenänderung bzw. der Phasensprung als Teil des Anregungsmusters an den Schwingungswandler ausgegeben wird bzw. zu einem Zeitpunkt mit definierter zeitlicher Lage bezüglich dieses Zeitpunkts können zwei Zeitzähler zurückgesetzt werden. Bei jedem erfassten Nulldurchgang bzw. jedem erfassten Nulldurchgang mit einer bestimmten Richtung kann ein erster dieser Zeitzähler ausgelesen und zurückgesetzt werden. Der jeweils ausgelesene Wert des Zeitzählers beschreibt dann die Zeitdauer eines Schwingungszyklus bzw. der positiven bzw. negativen Hälfte eines Schwingungszyklus. Aufgrund der Phasenänderung im ausgewählten Schwingungszyklus hat dieser bzw. haben dessen positive bzw. negative Teilschwingungen eine unterschiedliche Länge und können somit erkannt werden. In diesem Fall kann der Wert des zweiten Zeitzählers ausgelesen werden, also jenes Zeitzählers, der nicht bei jedem Nulldurchgang zurückgesetzt wird, um die Laufzeit der Welle zu dem Schwingungswandler bzw. dem weiteren Schwingungswandler zu ermitteln. Dies kann wie obig erläutert beispielsweise dazu dienen, anhand eines Laufzeitunterschieds zwischen Ausbreitungsrichtungen ein Durchflussvolumen zu bestimmen oder Ähnliches. Da der ausgelesene Wert des ersten Zeitzählers, insbesondere wenn er für positive bzw. negative Schwingungshälften erfasst wird, wie obig erläutert auch mit dem Druck zusammenhängt, kann aus diesem Wert der Druck ermittelt werden.

Der obig erläuterte Ansatz geht davon aus, dass die Zeitdauer des ausgewählten Schwingungszyklus zumindest näherungsweise bekannt ist, so dass anhand der Dauer des erfassten Zyklus bzw. des Werts des ersten Zeitzählers unmittelbar erkannt werden kann, dass gerade der ausgewählte Schwingungszyklus bzw. eine Teilschwingung hiervon erfasst wurde. Alternativ wäre es beispielsweise auch möglich, zeitlich aufeinander folgend erfasste Werte des Zeitzählers miteinander zu vergleichen, um anhand einer deutlichen Abweichung des Zählerwerts das Vorliegen des ausgewählten Schwingungszyklus zu erkennen oder Ähnliches.

Wie obig erläutert korreliert der aus dem ersten Zeitzähler ausgelesene Wert mit dem Druck. Ein entsprechender Zusammenhang kann beispielsweise durch eine Kalibriermessung für eine bestimmte Messeinrichtung oder für einen bestimmten Typ von Messeinrichtung ermittelt werden. Beispielsweise kann ein entsprechender Zusammenhang über eine Look-Up-Tabelle beschrieben werden oder es kann, beispielsweise durch eine Regressionsanalyse von mehreren Messungen, ein mathematischer Zusammenhang zwischen Druck und Zählerwert ermittelt werden.

Die Messeinrichtung kann ein Durchflusszähler sein, wobei die Steuereinrichtung dazu eingerichtet sein kann, einen Laufzeitunterschied zwischen einer ersten Laufzeit der Welle von dem Schwingungswandler zu dem weiteren Schwingungswandler und einer weiteren Laufzeit einer durch den weiteren Schwingungswandler angeregten weiteren Welle zu dem Schwingungswandler und aus der Laufzeitdifferenz den Durchfluss zu ermitteln. Die obig beschriebene Druckmessung kann in einem Durchflusszähler besonders vorteilhaft genutzt werden, da zumindest bei der oben erläuterten Art der Laufzeitermittlung ohnehin bereits alle zur Druckermittlung benötigten Informationen vorliegen. Ein Durchflusszähler kann somit beispielsweise durch ein reines Softwareupdate und eine entsprechende Kalibrierung zusätzlich zur Druckmessung genutzt werden.

Der Druck kann aus genau einer Zeitdauer genau eines vorgegebenen Teilmusters ermittelt werden. Hierdurch kann erreicht werden, dass die Druckermittlung auch in Betriebssituationen, in denen plötzliche Druck- oder Durchflussänderungen zu erwarten sind, aufgrund der kurzen Messzeit nicht oder nur unwesentlich gestört werden kann.

Neben der erfindungsgemäßen Messeinrichtung betrifft die Erfindung ein Verfahren zur Ermittlung eines Drucks in einem ein Fluid aufnehmenden oder von dem Fluid durchströmten Messvolumen nach Anspruch 7.

Weitere Vorteile und Einzelheiten der Erfindung ergeben sich aus den folgenden Ausführungsbeispielen sowie den zugehörigen Zeichnungen. Hierbei zeigen schematisch:
- Fig. 1: ein Ausführungsbeispiel einer erfindungsgemäßen Messeinrichtung, durch die ein Ausführungsbeispiel des erfindungsgemäßen Verfahrens ausführbar ist,
- Fig. 2: ein Anregungsmuster für einen Schwingungswandler und das Ausgangssignal eines weiteren Schwingungswandlers in einem Ausführungsbeispiel des erfindungsgemäßen Verfahrens, und
- Fig. 3: beispielhafte Messdaten für ein Ausführungsbeispiel des erfindungsgemäßen Verfahrens.

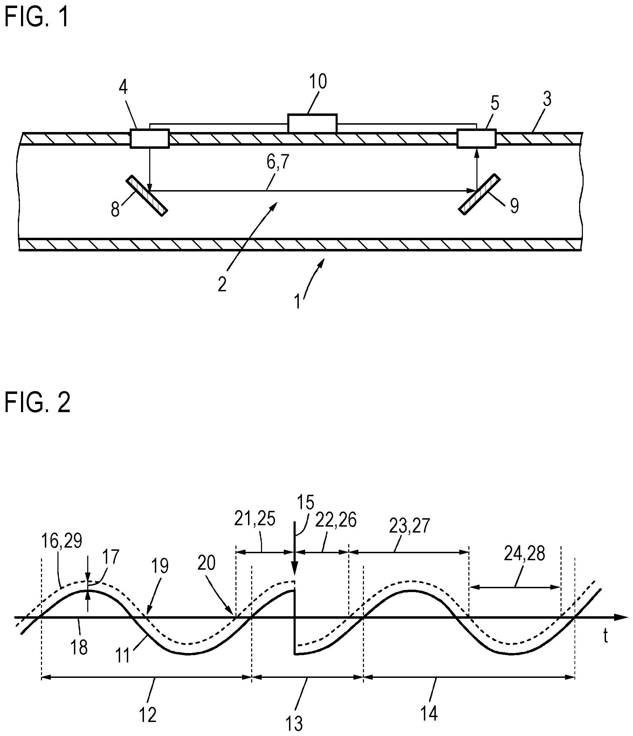

Fig. 1 zeigt eine Messeinrichtung 1 zur Ermittlung eines Drucks in einem von einem Fluid durchströmten Messvolumen 2. Das Fluid kann insbesondere eine Flüssigkeit, beispielsweise Wasser, oder ein Gas sein. In dem gezeigten Beispiel ist die Messeinrichtung 1 ein Durchflusszähler, der dazu dient, eine durch das Messvolumen 2 strömende Flüssigkeitsmenge zu erfassen. Hierzu wird durch eine Steuereinrichtung 10 eine Laufzeit einer Welle 6, die durch den Schwingungswandler 4 angeregt wird, entlang dem Ausbreitungspfad 7 zu dem weiteren Schwingungswandler 5 erfasst. In Abhängigkeit der Laufzeitdifferenz zwischen dieser Laufzeit und der Laufzeit einer in die umgekehrte Richtung geführten Welle wird, wie prinzipiell im Stand der Technik bekannt ist, ein Durchfluss ermittelt. Im gezeigten Beispiel wird die Welle 6 durch die Reflektoren 8, 9 umgelenkt, um sie entlang dem Ausbreitungspfad 7 zu führen.

Die Welle 6 regt bei ihrem Auftreffen auf den weiteren Schwingungswandler 5 eine Schwingung des weiteren Schwingungswandlers 5 mit einem bestimmten Schwingungsmuster an. In der Messeinrichtung 1 wird ausgenutzt, dass durch Messung einer Zeitdauer eines vorgegebenen Teilmusters dieses Schwingungsmusters als Messdaten, wie im Folgenden mit Bezug auf Fig. 2 genauer erläutert werden wird, ein Druck in dem Messvolumen 2 ermittelt werden kann. Eine derartige Druckmessung ist in einem Durchflusszähler, also der gezeigten Messeinrichtung 1, besonders vorteilhaft, da ohnehin vorhandene Sensorik mitgenutzt werden kann und die Druckermittlung durch eine reine Anpassung der Datenverarbeitung in der Steuereinrichtung 10 erreicht werden kann. Prinzipiell wäre es auch möglich, die beschriebene Druckmessung unabhängig von einer Durchflussmessung durchzuführen. Hierbei wäre es auch ausreichend, nur einen Schwingungswandler 4 zu nutzen, zu dem die Welle 6 entlang dem Ausbreitungspfad 7 zurückgeführt wird. Beispielsweise könnte die Welle 6 bei Weglassen des Reflektors 8 an der gegenüberliegenden Seitenwand 3 des Messvolumens zurück zu dem Schwingungswandler 4 reflektiert werden. Es könnte hierbei ausschließlich die Zeitdauer des Teilmusters ausgewertet werden, um einen Druck zu messen. Prinzipiell könnte jedoch auch eine Laufzeit ermittelt werden, beispielsweise um eine Fluidtemperatur oder eine andere Fluideigenschaft zu ermitteln.

Fig. 2 zeigt den zeitlichen Verlauf eines Anregungsmusters 11, mit dem der Schwingungswandler 4 durch die Steuereinrichtung 10 angesteuert wird. Das Anregungsmuster 11 kann beispielsweise ein Spannungsverlauf sein, der an einem als Schwingungswandler 4 genutzten piezoelektrischen Element anliegt. Hierbei sind in Fig. 2 als beispielhaftes Anregungsmuster 11 drei Schwingungszyklen 12, 13, 14 einer Sinusschwingung dargestellt, wobei ein ausgewählter Schwingungszyklus 13 dadurch markiert wird, dass innerhalb dieses Schwingungszyklus 13 eine Phasenänderung 15, im Beispiel ein Phasensprung, erfolgt. Hierbei ist ein Phasensprung um ca. 180° gezeigt, wobei auch andere Phasenänderungen genutzt werden könnten. In realen Anregungsmustern 11 werden typischerweise mehr als drei Schwingungszyklen genutzt und die Amplitude der Schwingungszyklen wird durch eine Einhüllende bzw. Fensterfunktion moduliert.

Fig. 2 zeigt zudem schematisch ein Ausgangssignal 16 des Schwingungswandlers 5, nachdem die entsprechende Welle 6 am Schwingungswandler 5 eingelaufen ist. Das Ausgangssignal 16 wäre tatsächlich um die Laufzeit der Welle 6 entlang dem Ausbreitungspfad 7 zu dem Anregungsmuster 11 versetzt. Zur klareren Darstellung wurde das Ausgangsmuster 16 in Fig. 2 um diese Laufzeit nach links verschoben, so dass das Anregungsmuster 11 und das Ausgangssignal 16 im gleichen Zeitintervall dargestellt sind. In Fig. 2 erfolgt zudem eine vereinfachte Darstellung des Ausgangssignals 16, bei der Verzerrungen und andere Beeinflussungen des Ausgangssignals 16 aufgrund von Nichtlinearität der Schwingungswandler 4, 5, der Dispersion im Fluid und aufgrund einer Vorspannung der Schwingungswandler 4, 5 aufgrund des Drucks im Messvolumen 2 nicht berücksichtigt werden.

Als einziger Effekt des Drucks im Messvolumen 2 ist in Fig. 2 der Offset 17 des Ausgangssignals 16 gezeigt. Dieser resultiert daraus, dass beispielsweise ein Schwingungswandler 5 auf Basis eines piezoelektrischen Elements letztlich einen Druck bzw. Kraftsensor darstellt, womit dessen Ausgangssignal 16 einen Gleichspannungsanteil, der dem Offset 17 entspricht und der von dem Druck im Messvolumen 2 abhängt, und einen Wechselspannungsanteil, der durch die einlaufende Welle 6 verursacht ist, umfasst. Somit oszilliert das Ausgangssignal 16 weiterhin um einen Referenzwert 18, beispielsweise 0 V, diese Oszillation ist jedoch aufgrund des Offsets 17 asymmetrisch.

Die Steuereinrichtung 10 ist dazu eingerichtet, Nulldurchgänge bzw. Vorzeichenwechsel 19, 20 des Ausgangssignals 16 bzw. der Differenz von Ausgangssignal 16 und Referenzwert 18 zu erkennen, beispielsweise mithilfe eines Komparators, der das Auslesen eines Zeitzählers triggert. Hierdurch können die Zeitdauern 21 bis 24 für verschiedene Teilmuster 25 bis 28 des Ausgangssignals 16 bzw. des durch dieses beschriebenen Schwingungsmusters 29 ermittelt werden. Anhand dieser Zeitdauern 21 bis 24 können einerseits die Teilmuster 25, 26 erkannt werden, die zum ausgewählten Schwingungszyklus 13 gehören, da deren Zeitdauern 21, 22 sich aufgrund des Phasensprungs 15 deutlich von den Zeitdauern 23, 24 der Teilmuster 27, 28 unterscheiden. Hierdurch kann beispielsweise eindeutig der Zeitpunkt ermittelt werden, zu dem der Phasensprung bzw. die Phasenänderung 15 den weiteren Schwingungswandler 5 erreicht, womit die Laufzeit der Welle vom Schwingungswandler 4 zum weiteren Schwingungswandler 5 mit hoher Genauigkeit bestimmt werden kann. Dies kann beispielsweise zur obig erläuterten Ermittlung eines Laufzeitunterschieds dienen.

Zudem führt, wie in Fig. 2 zu erkennen ist, eine Vergrößerung des Offsets 17 dazu, dass die Zeitdauer 21 für das Teilmuster 25 länger wird und die Zeitdauer 22 für das Teilmuster 26 kürzer. Die Zeitdauer 21 oder 22 oder auch eine Kombination dieser Zeitdauern, beispielsweise eine Differenz, kann somit genutzt werden, um auf den Offset 17 und somit auf den Druck im Messvolumen 2 zurückzuschließen. Hierzu kann beispielsweise durch eine vorangehende Kalibrierung der Messeinrichtung 1 bzw. von einer Gruppe von baugleichen Messeinrichtungen 1 eine Look-Up-Tabelle oder ein mathematischer Zusammenhang zwischen der Zeitdauer 21 bzw. 22 und dem Druck definiert werden. Wird, wie im gezeigten Beispiel, eine Sinusschwingung zur Anregung genutzt, ist die Änderung der Zeitdauer 21 bis 24 näherungsweise linear abhängig zum Offset 17 und somit beispielsweise im Falle von Piezowandlern insbesondere auch zum Druck.

Wie vorangehend bereits erläutert kann der Druck im Messvolumen 2 zudem auch zu Verzerrungen des Ausgangssignals 16 bzw. des Schwingungsmusters 29 bzw. zu einer Änderung des Transientenverhaltens, insbesondere im Bereich der Phasenänderung 15, führen. Diese Effekte können einen zusätzlichen Beitrag zur Änderung der Zeitdauern 21, 22 mit dem Druck leisten, so dass das beschriebene Vorgehen unter Umständen eine höhere Genauigkeit bei der Druckerfassung erreichen kann, als sie alleine mit der vorangehend erläuterten Erkennung des Offsets 17 über die Zeitdauern 21, 22 möglich wäre.

Gegenüber einer direkten Messung des Offsets 17 wird zudem der Vorteil erreicht, dass die Druckmessung als Teil einer normalen Durchflussmessung durchgeführt werden kann und nicht nur in Ruhephasen, während keine Durchflussmessung erfolgt. Zudem ist es bei dem beschriebenen Vorgehen nicht nötig, konkrete Werte für das Ausgangssignal 16 zu erfassen, sondern es ist ausreichend, die Vorzeichenwechsel 19, 20 bzw. Nulldurchgänge zu erkennen. Das Vorgehen kann somit einfach implementiert werden und insbesondere können übliche Durchflusszähler mit geringem Aufwand, beispielsweise durch ein reines Softwareupdate, modifiziert werden, um das beschriebene Verfahren durchzuführen.

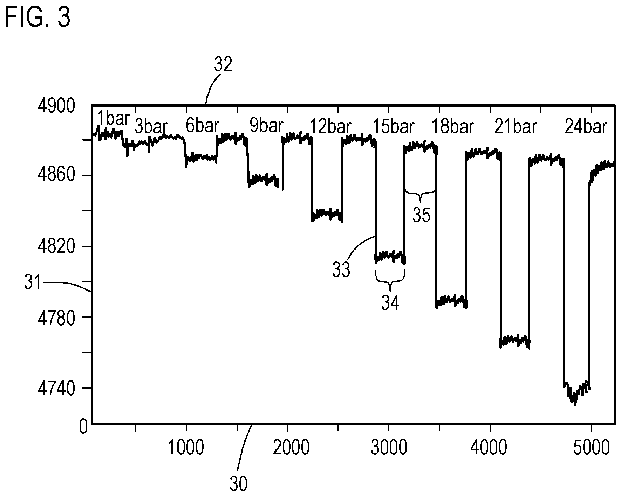

Fig. 3 zeigt Messdaten 33 einer Beispielmessung des Drucks anhand einer Zeitdauer eines bestimmten empfangenen Teilmusters bzw. für den Zeitabstand zwischen zwei Vorzeichenwechseln der Differenz des Ausgangssignals 16 und des Referenzwertes 18. Hierbei zeigt die untere X-Achse 30 die Nummer der aktuellen Messung, die Y-Achse 31 den Wert eines Zeitzählers, der zu Beginn des in Fig. 2 gezeigten Teilmusters 26 zurückgesetzt und an dessen Ende ausgelesen wird, und die obere X-Achse 32 zeigt Druckwerte, die während eines jeweiligen Hochdruckintervalls 34 eingestellt werden. Zwischen den Hochdruckintervallen 34 wird der Druck im Messvolumen 2 jeweils während eines Normaldruckintervalls 35 wieder auf normalen Druck abgesenkt. Wie in Fig. 3 klar zu erkenne ist, sind die Messdaten 33, also die jeweiligen Zeitdauern 22 des Teilmusters 26, ein gutes Maß für den Druck, wobei die Zeitdauer 22 näherungsweise linear mit dem Druck variiert.

### Bezugszeichenliste

- 1: Messeinrichtung
- 2: Messvolumen
- 3: Seitenwand
- 4: Schwingungswandler
- 5: Schwingungswandler
- 6: Welle
- 7: Ausbreitungspfad
- 8: Reflektor
- 9: Reflektor
- 10: Steuereinrichtung
- 11: Anregungsmuster
- 12: Schwingungszyklus
- 13: Schwingungszyklus
- 14: Schwingungszyklus
- 15: Phasenänderung
- 16: Ausgangssignal
- 17: Offset
- 18: Referenzwert
- 19: Vorzeichenwechsel
- 20: Vorzeichenwechsel
- 21: Zeitdauer
- 22: Zeitdauer
- 23: Zeitdauer
- 24: Zeitdauer
- 25: Teilmuster
- 26: Teilmuster
- 27: Teilmuster
- 28: Teilmuster
- 29: Schwingungsmuster
- 30: X-Achse
- 31: Y-Achse
- 32: X-Achse
- 33: Messdaten
- 34: Hochdruckintervall
- 35: Normaldruckintervall

## Patentansprüche

1. Messeinrichtung zur Ermittlung eines Drucks in einem ein Fluid aufnehmenden oder von dem Fluid durchströmten Messvolumen (2), wobei an dem Messvolumen (2) ein Schwingungswandler (4) der Messeinrichtung (1) angeordnet ist, wobei eine Steuereinrichtung (10) der Messeinrichtung (1) dazu eingerichtet ist, den Schwingungswandler (4) zur Anregung einer Welle (6) in dem Fluid anzusteuern, wobei der Schwingungswandler (4) derart eingerichtet und an dem Messvolumen (2) angeordnet ist, dass die Welle (6) entlang eines Ausbreitungspfades (7) zurück zu dem Schwingungswandler (4) oder zu wenigstens einem an dem Messvolumen (2) angeordneten weiteren Schwingungswandler (5) der Messeinrichtung (1) geführt wird, wobei die Steuereinrichtung (10) dazu eingerichtet ist, ein durch die Welle (6) angeregtes Schwingungsmuster (29) des oder des weiteren Schwingungswandlers (4, 5) betreffende Messdaten (33) zu erfassen und in Abhängigkeit der Messdaten (33) den Druck in dem Messvolumen (2) zu ermitteln, **dadurch gekennzeichnet, dass** die Steuereinrichtung (10) dazu eingerichtet ist, als Messdaten (33) eine Zeitdauer (21 - 24) eines vorgegebenen Teilmusters (25 - 28) des Schwingungsmusters (29) und aus der Zeitdauer (21 - 24) den Druck in dem Messvolumen (2) zu ermitteln, wobei das Schwingungsmuster (29) betreffende Ausgangssignale (16) des oder des weiteren Schwingungswandlers (4, 5) um einen Referenzwert (18) oszillieren, wobei die Zeitdauer (21 - 24) als Zeitabstand zwischen zwei zeitlich aufeinanderfolgenden Vorzeichenwechseln (19, 20) der Differenz aus Ausgangssignal (16) und Referenzwert (18) ermittelt wird.

2. Messeinrichtung nach Anspruch 1, **dadurch gekennzeichnet, dass** die Steuereinrichtung (10) dazu eingerichtet ist, den Schwingungswandler (4) mit einem vorgegebenen Anregungsmuster (11) anzusteuern, das mehrere Schwingungszyklen (12 - 14) einer Schwingung, insbesondere einer Sinusschwingung, umfasst, wobei ein ausgewählter der Schwingungszyklen (13) durch einen Phasenänderung (15), insbesondere einen Phasensprung, markiert ist.

3. Messeinrichtung nach Anspruch 2, **dadurch gekennzeichnet, dass** das vorgegebene Teilmuster (25, 26) des Schwingungsmusters (29) von dem Anregungsmuster (11) in dem ausgewählten Schwingungszyklus (13) abhängt.

4. Messeinrichtung nach Anspruch 2 oder 3, **dadurch gekennzeichnet, dass** die Steuereinrichtung (10) dazu eingerichtet ist, einen Erfassungszeitpunkt , zu dem das Teilmuster (25, 26, 27, 28) erfasst wird, zu ermitteln und in Abhängigkeit des Erfassungszeitpunkts eine Durchflussgeschwindigkeit oder ein Durchflussvolumen des Fluids durch das Messvolumen (2) zu ermitteln.

5. Messeinrichtung nach einem der vorangehenden Ansprüche, **dadurch gekennzeichnet, dass** die Messeinrichtung (1) ein Durchflusszähler ist, wobei die Steuereinrichtung (10) dazu eingerichtet ist, einen Laufzeitunterschied zwischen einer ersten Laufzeit der Welle (6) von dem Schwingungswandler (4) zu dem weiteren Schwingungswandler (5) und einer weiteren Laufzeit einer durch den weiteren Schwingungswandler (6) angeregten weiteren Welle zu dem Schwingungswandler (5) und aus der Laufzeitdifferenz den Durchfluss zu ermitteln.

6. Messeinrichtung nach einem der vorangehenden Ansprüche, **dadurch gekennzeichnet, dass** der Druck aus genau einer Zeitdauer (21 - 24) genau eines vorgegebenen Teilmusters (25 - 28) ermittelt wird.

7. Verfahren zur Ermittlung eines Drucks in einem ein Fluid aufnehmenden oder von dem Fluid durchströmten Messvolumen (2), wobei an dem Messvolumen (2) ein Schwingungswandler (4) angeordnet ist, wobei der Schwingungswandler (4) zur Anregung einer Welle (6) in dem Fluid angesteuert wird, wobei die Welle (6) entlang eines Ausbreitungspfades (7) zurück zu dem Schwingungswandler (4) oder zu einem an dem Messvolumen (2) angeordneten weiteren Schwingungswandler (5) geführt wird, wobei Messdaten (33) erfasst werden, die ein durch die Welle (6) angeregtes Schwingungsmuster (29) des oder des weiteren Schwingungswandlers (4, 5) betreffen, und wobei in Abhängigkeit der Messdaten (33) der Druck in dem Messvolumen (2) ermittelt wird, **dadurch gekennzeichnet, dass** als Messdaten (33) eine Zeitdauer (21 - 24) eines vorgegebenen Teilmusters (25 - 28) des Schwingungsmusters (29) und aus der Zeitdauer (21 - 24) der Druck in dem Messvolumen (2) ermittelt werden, wobei das Schwingungsmuster (29) betreffende Ausgangssignale (16) des oder des weiteren Schwingungswandlers (4, 5) um einen Referenzwert (18) oszillieren, wobei die Zeitdauer (21 - 24) als Zeitabstand zwischen zwei zeitlich aufeinanderfolgenden Vorzeichenwechseln (19, 20) der Differenz aus Ausgangssignal (16) und Referenzwert (18) ermittelt wird.

## Claims

1. Measuring device for determining a pressure in a measurement volume (2) which receives a fluid or through which the fluid flows, wherein an oscillation transducer (4) of the measuring device (1) is arranged on the measurement volume (2), wherein a control device (10) of the measuring device (1) is set up to activate the oscillation transducer (4) for exciting a wave (6) in the fluid, wherein the oscillation transducer (4) is set up and arranged on the measurement volume (2) in such a way that the wave (6) is returned along a propagation path (7) to the oscillation transducer (4) or to at least one further oscillation transducer (5) of the measuring device (1) arranged on the measurement volume (2), wherein the control device (10) is set up to record measurement data (33) concerning an oscillation pattern (29) of the or the further oscillation transducer (4, 5) that is excited by the wave (6) and to determine the pressure in the measurement volume (2) on the basis of the measurement data (33), **characterized in that** the control device (10) is set up to determine as measurement data (33) a time period (21-24) of a predetermined sub-pattern (25-28) of the oscillation pattern (29) and, from the time period (21-24), the pressure in the measurement volume (2), wherein output signals (16) of the or the further oscillation transducer (4, 5) concerning the oscillation pattern (29) oscillate about a reference value (18), wherein the time period (21-24) is determined as a time interval between two temporally successive changes in sign (19, 20) of the difference between the output signal (16) and the reference value (18).

2. Measuring device according to Claim 1, **characterized in that** the control device (10) is set up to activate the oscillation transducer (4) with a predetermined excitation pattern (11), which comprises multiple oscillation cycles (12-14) of an oscillation, in particular a sinusoidal oscillation, wherein a selected one of the oscillation cycles (13) is marked by a phase change (15), in particular a phase jump.

3. Measuring device according to Claim 2, **characterized in that** the predetermined sub-pattern (25, 26) of the oscillation pattern (29) depends on the excitation pattern (11) in the selected oscillation cycle (13).

4. Measuring device according to Claim 2 or 3, **characterized in that** the control device (10) is set up to determine a recording time at which the sub-pattern (25, 26, 27, 28) is recorded and to determine a flow rate or a flow volume of the fluid through the measurement volume (2) on the basis of the recording time.

5. Measuring device according to one of the preceding claims, **characterized in that** the measuring device (1) is a flowmeter, wherein the control device (10) is set up to determine a difference in transit times between a first transit time of the wave (6) from the oscillation transducer (4) to the further oscillation transducer (5) and a further transit time of a further wave, excited by the further oscillation transducer (6), to the oscillation transducer (5) and to determine the flow from the difference in the transit times.

6. Measuring device according to one of the preceding claims, **characterized in that** the pressure is determined from exactly one time period (21-24) of exactly one predetermined sub-pattern (25-28).

7. Method for determining a pressure in a measurement volume (2) which receives a fluid or through which the fluid flows, wherein an oscillation transducer (4) is arranged on the measurement volume (2), wherein the oscillation transducer (4) is activated for exciting a wave (6) in the fluid, wherein the wave (6) is returned along a propagation path (7) to the oscillation transducer (4) or to a further oscillation transducer (5) arranged on the measurement volume (2), wherein measurement data (33) which concern an oscillation pattern (29) of the or the further oscillation transducer (4, 5) that is excited by the wave (6) are recorded, and wherein the pressure in the measurement volume (2) is determined on the basis of the measurement data (33), **characterized in that** a time period (21-24) of a predetermined sub-pattern (25-28) of the oscillation pattern (29) and, from the time period (21-24), the pressure in the measurement volume (2) are determined as measurement data (33), wherein output signals (16) of the or the further oscillation transducer (4, 5) concerning the oscillation pattern (29) oscillate about a reference value (18), wherein the time period (21-24) is determined as a time interval between two temporally successive changes in sign (19, 20) of the difference between the output signal (16) and the reference value (18).

## Revendications

1. Dispositif de mesure destiné à déterminer une pression dans un volume de mesure (2) recevant un fluide ou traversé par le fluide, un convertisseur de vibrations (4) du dispositif de mesure (1) étant disposé sur le volume de mesure (2), un dispositif de commande (10) du dispositif de mesure (1) étant conçu pour commander le convertisseur de vibrations (4) afin de générer une onde (6) dans le fluide, le convertisseur de vibrations (4) étant conçu et disposé sur le volume de mesure (2) de manière à guider l'onde (6) le long d'un chemin de propagation (7) retournant au convertisseur de vibrations (4) ou allant à au moins un autre convertisseur de vibrations (5), disposé sur le volume de mesure (2), du dispositif de mesure (1), le dispositif de commande (10) étant conçu pour acquérir des données de mesure (33) concernant un modèle de vibration (29), généré par l'onde (6), du convertisseur de vibrations ou de l'autre convertisseur de vibrations (4, 5) et pour déterminer la pression dans le volume de mesure (2) en fonction des données de mesure (33), **caractérisé en ce que** le dispositif de commande (10) est conçu pour déterminer une durée (21-24) d'une partie spécifiée (25-28) du modèle de vibration (29) comme données de mesure (33) et la pression dans le volume de mesure (2) à partir de la durée (21-24), des signaux de sortie (16), concernant le modèle de vibration (29), du convertisseur de vibrations ou de l'autre convertisseur de vibrations (4, 5) oscillant autour d'une valeur de référence (18), la durée (21 -24) étant déterminée comme l'intervalle de temps entre deux changements de signe consécutifs (19, 20) de la différence entre le signal de sortie (16) et la valeur de référence (18).

2. Dispositif de mesure selon la revendication 1, **caractérisé en ce que** le dispositif de commande (10) est conçu pour commander le convertisseur de vibrations (4) avec un modèle de génération spécifié (11) qui comprend une pluralité de cycles de vibration (12-14) d'une vibration, notamment d'une vibration sinusoïdale, l'un des cycles de vibration (13) qui a été sélectionné étant marqué par un changement de phase (15), en particulier un saut de phase.

3. Dispositif de mesure selon la revendication 2, **caractérisé en ce que** la partie spécifiée (25, 26) du modèle de vibration (29) dépend du modèle de génération (11) dans le cycle de vibration (13) sélectionné.

4. Dispositif de mesure selon la revendication 2 ou 3, **caractérisé en ce que** le dispositif de commande (10) est conçu pour déterminer un instant d'acquisition auquel la partie (25, 26, 27, 28) du modèle est détectée et pour déterminer un débit ou un volume d'écoulement du fluide à travers le volume de mesure (2) en fonction de l'instant d'acquisition.

5. Dispositif de mesure selon l'une des revendications précédentes, **caractérisé en ce que** le dispositif de mesure (1) est un débitmètre, le dispositif de commande (10) étant conçu pour calculer une différence de temps de propagation entre un premier temps de propagation de l'onde (6) du convertisseur de vibrations (4) à l'autre convertisseur de vibrations (5) et un autre temps de propagation d'une autre onde, générée par l'autre convertisseur de vibrations (6), vers le convertisseur de vibrations (5) et pour déterminer le débit à partir de la différence de temps de propagation.

6. Dispositif de mesure selon l'une des revendications précédentes, **caractérisé en ce que** la pression est déterminée à partir d'exactement une durée (21-24) d'exactement une partie spécifiée (25-28) du modèle.

7. Procédé de détermination d'une pression dans un volume de mesure (2) recevant un fluide ou traversé par le fluide, un convertisseur de vibrations (4) étant disposé sur le volume de mesure (2), le convertisseur de vibrations (4) étant commandé pour générer une onde (6) dans le fluide, l'onde (6) étant guidée le long d'un chemin de propagation (7) vers le convertisseur de vibrations (4) ou vers un autre convertisseur de vibrations (5) disposé sur le volume de mesure (2), des données de mesure (33) étant acquises qui concernent un modèle de vibration (29), généré par l'onde (6), du convertisseur de vibrations ou de l'autre convertisseur de vibrations (4, 5), et la pression dans le volume de mesure (2) étant déterminée en fonction des données de mesure (33), **caractérisé en ce qu'**une durée (21-24) d'une partie spécifiée (25-28) du modèle de vibration (29) est déterminée comme données de mesure (33) et la pression dans le volume de mesure (2) est déterminée à partir de la durée (21-24), des signaux de sortie (16), concernant le modèle de vibration (29) du convertisseur de vibrations ou de l'autre convertisseur de vibrations (4, 5) oscillant autour d'une valeur de référence (18), la durée (21-24) étant déterminée comme l'intervalle de temps entre deux changements de signe consécutifs (19, 20) de la différence entre le signal de sortie (16) et la valeur de référence (18).
